Europäisches Patentamt

European Patent Office

Office européen des brevets

(19)

(11)  EP 0 965 898 B1

(12)  **FASCICULE DE BREVET EUROPEEN**

(45) Date de publication et mention
de la délivrance du brevet:
**05.12.2001  Bulletin 2001/49**

(51) Int Cl.⁷: $G05D\ 7/01$, F16K 47/00,
F02C 7/232

(21) Numéro de dépôt: **99400907.4**

(22) Date de dépôt: **14.04.1999**

(54) **Dispositif autonome de limitation du débit d'un fluide dans une canalisation et circuit de carburant pour aéronef comportant un tel dispositif**

Eigenständige Vorrichtung zur Durchflussbegrenzung eines Fluides in einer Leitung und Treibstoffkreis eines Flugzeuges mit einer solchen Vorrichtung

Autonomous fluid flow limiting device for a conduit and aircraft fuel installation incorporating it

(84) Etats contractants désignés:
**DE ES GB IT SE**

(30) Priorité:  **19.06.1998  FR 9807741**

(43) Date de publication de la demande:
**22.12.1999  Bulletin 1999/51**

(73) Titulaire: **AEROSPATIALE MATRA**
**75016 Paris (FR)**

(72) Inventeur: **Fabre, Christian**
**31170 Tournefeuille (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 751 448     AT-B- 319 675**
**DE-A- 4 316 484     US-A- 3 428 080**
**US-A- 4 210 171**

## Description

La présente invention concerne un dispositif autonome de limitation du débit d'un fluide dans une canalisation, ainsi qu'un circuit de carburant pour aéronef comportant un tel dispositif.

Il est souvent utile, dans de nombreuses applications, lorsque l'on est en présence d'un fluide circulant dans une canalisation, de pouvoir limiter le débit de ce fluide à une valeur préréglée.

On connaît des dispositifs permettant de limiter le débit d'un fluide, mais tous ne peuvent pas être indifféremment utilisés avec des gaz et des liquides. En outre, de nombreux dispositifs connus fonctionnent suivant l'un ou l'autre des modes suivants :

- soit en mode contrôlé, nécessitant alors au moins un organe de mesure d'une grandeur physique (tension ou courant issu d'un débitmètre, pression, notamment) qui, associé via une boucle de régulation, permet la commande d'un organe régulateur (vanne obturatrice par exemple),
- soit en mode non contrôlé, dans lequel cas la limitation du débit est assurée par le dimensionnement d'organes restrictifs placés directement dans la canalisation (diaphragme, tuyère, notamment), éventuellement associés à des dispositifs détendeurs.

Dans le cas du mode contrôlé, le fonctionnement n'est pas autonome et reste tributaire d'organes de mesure d'une grandeur physique et de régulation, associés à une logique adaptée et à une source d'énergie extérieure.

En mode non contrôlé, le fonctionnement demeure dépendant de paramètres susceptibles d'évoluer, comme la pression en amont du dispositif, par exemple, et le débit ne peut être limité que pour une pression maximale amont bien définie.

Ainsi, les dispositifs connus mentionnés ci-dessus ne peuvent pas s'affranchir à la fois de la nature du fluide (gazeux ou liquide), de valeurs connues des niveaux de pression, ou d'une alimentation en énergie pour alimenter les organes de limitation de débit (obturateur ou vanne par exemple).

Par ailleurs, par les documents US-5 775 369, AT-319 675 et US-3 428 080, on connaît déjà un dispositif autonome de limitation du débit d'un fluide dans une canalisation, le débit dudit fluide dépendant de la section de passage dudit fluide dans ladite canalisation et de la différence des pressions amont et aval, relativement à ladite section de passage, dans le sens d'écoulement dudit fluide, ledit dispositif comportant :

- un boîtier délimitant une première chambre subdivisée en deux parties de chambre reliées entre elles par un premier orifice formant ladite section de passage ;
- un premier clapet pour régler ladite section de passage ;
- des moyens déformables, reliés rigidement audit premier clapet et soumis, d'un côté, à ladite pression amont et, de l'autre côté, à ladite pression aval, et
- des moyens aptes à définir, pour une différence prédéterminée desdites pressions amont et aval, une position d'équilibre pour ledit premier clapet et lesdits moyens déformables,

une variation de la différence desdites pressions amont et aval entraînant une déformation desdits moyens déformables et un déplacement concomitant dudit premier clapet pour ramener la différence desdites pressions amont et aval à celle correspondant à ladite position d'équilibre.

Quoique non exclusivement, la présente invention est plus particulièrement appropriée pour la limitation du débit de carburant fourni par un aéronef au(x) moteur(s) de celui-ci, afin d'éviter le phénomène d'embarquement de poussée ou "sur-poussée" (également connu sous le nom de "overthrust") susceptible de se produire en cas de dysfonctionnement des systèmes de régulation du débit de carburant. Ce phénomène, pouvant apparaître pendant les phases les plus délicates de vol, en particulier à l'atterrissage (approche finale et arrondi notamment), peut conduire à une situation dangereuse, la limite de contrôlabilité de l'appareil pouvant être atteinte.

La présente invention a pour objet de remédier à ces inconvénients en perfectionnant le dispositif autonome connu rappelé en dernier lieu

A cette fin, selon l'invention, le dispositif autonome du type mentionné ci-dessus est caractérisé en ce qu'il comporte, dans une seconde chambre dudit boîtier reliée à ladite première chambre et subdivisée en deux parties de chambre reliées entre elles par un second orifice, un second clapet disposé en regard dudit second orifice et relié rigidement audit premier clapet, de façon que l'un desdits premier et second clapets s'ouvre quand l'autre se ferme et vice-versa.

Ainsi, le dispositif selon l'invention, qui est totalement autonome sans aucun apport d'énergie extérieur, qui est utilisable quelle que soit la nature du fluide circulant dans la canalisation sur laquelle il est monté, et dont la mise en oeuvre ne dépend que de la valeur, imposée, de la différence des pressions amont et aval, laquelle est maintenue constante entre l'amont et l'aval d'une section de passage bien définie, permet d'éviter le phénomène de sur-poussée.

De préférence, les moyens déformables sont constitués par une membrane souple, ancrée à la surface interne dudit boîtier et reliée audit premier clapet par une tige rigide et ledit second clapet est relié rigidement audit premier clapet par l'intermédiaire d'une tige de liaison et de ladite tige rigide .

Avantageusement, un conduit de dérivation, relié à une partie d'extrémité de raccord amont dudit boîtier, permet de soumettre une première face de ladite membrane à ladite pression amont, la seconde face de ladite membrane étant soumise à ladite pression aval régnant dans ladite partie de chambre comprise entre ledit clapet tronconique et ladite membrane.

Par ailleurs, lesdits moyens aptes à définir ladite position d'équilibre comprennent au moins un ensemble vis-ressort précontraint destiné à agir sur ledit ensemble membrane - premier clapet - tige rigide.

La présente invention concerne également un circuit de carburant pour aéronef, présentant, au niveau d'une aile de ce dernier, un réservoir de carburant et une canalisation menant à un moteur, et remarquable en ce qu'il comporte un dispositif tel que défini précédemment, monté sur ladite canalisation.

Par ailleurs, dans le circuit de carburant pour aéronef, dans lequel des pompes de gavage ou de suralimentation alimentent ladite canalisation en carburant, cette dernière présentant une vanne d'isolation basse pression, le dispositif selon l'invention peut être monté en amont de ladite vanne d'isolation, relativement au sens d'écoulement du carburant vers le moteur, ou au niveau du mât dudit moteur et, donc, immédiatement en aval de la vanne d'isolation.

Les figures du dessin annexé feront bien comprendre comment l'invention peut être réalisée. Sur ces figures, des références identiques désignent des éléments semblables.

La figure 1 est une coupe transversale schématique d'un exemple de réalisation du dispositif de limitation du débit d'un fluide dans une canalisation.

La figure 2 illustre schématiquement, en vue de dessus, une partie du circuit de carburant d'un aéronef, montrant le(s) emplacement(s) possible(s) du dispositif selon l'invention.

La figure 3 est une vue en perspective schématique reprenant les éléments essentiels du circuit de la figure 2.

La figure 4 illustre le fonctionnement du dispositif selon l'invention de la figure 1.

La figure 5 montre un détail agrandi de la figure 4.

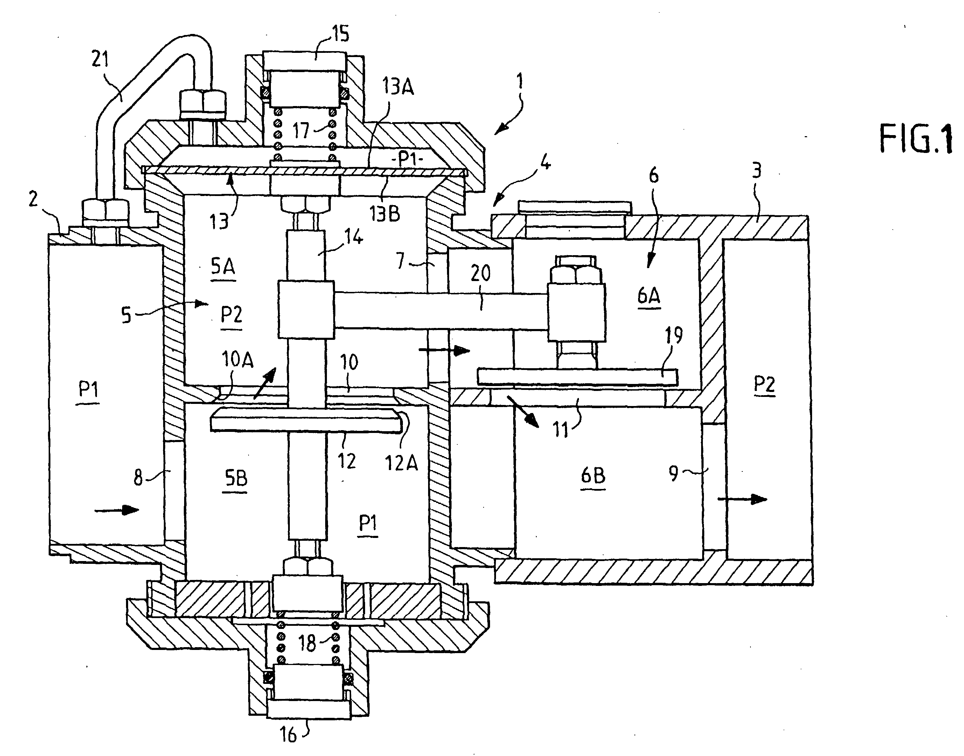

En regard de la figure 1, le dispositif 1 de limitation du débit d'un fluide est destiné à être installé dans une canalisation (non représentée sur la figure 1) par l'intermédiaire de deux parties d'extrémité de raccord 2, 3 respectivement amont et aval, relativement au sens d'écoulement du fluide indiqué par les flèches sur la figure 1, faisant partie d'un boîtier 4 dans lequel sont prévues des première et seconde chambres 5, 6 respectivement, reliées entre elles par un orifice 7, et aux parties d'extrémité de raccord 2, 3, par des orifices 8, 9, respectivement.

La première chambre 5 est elle-même subdivisée en deux parties de chambre 5A, 5B, respectivement supérieure et inférieure, reliées par un orifice 10, de même que la seconde chambre 6 dont les parties supérieure 6A et inférieure 6B sont reliées par un orifice 11.

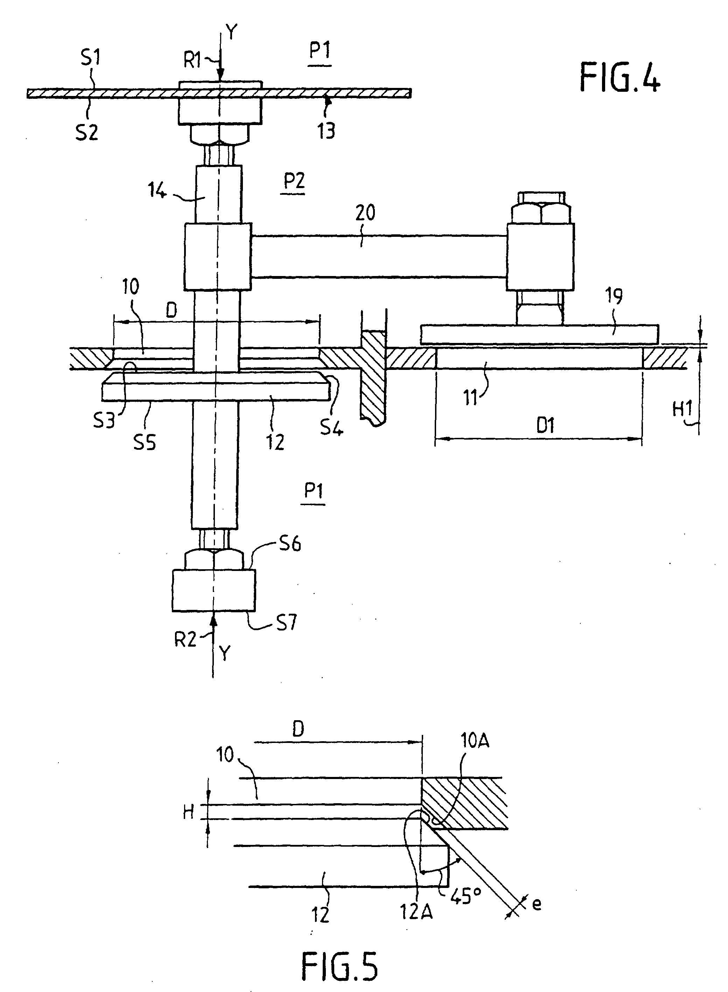

Par ailleurs, le dispositif 1 comporte, dans la partie de chambre 5B, un clapet ou obturateur 12 dont la surface tronconique supérieure 12A présente une configuration correspondant à la surface inférieure 10A du bord de l'orifice 10 (cet obturateur 12 sera désigné ci-après comme clapet conique). Le clapet conique 12 est relié à une membrane souple 13 (ancrée à la surface interne du boîtier 4) par l'intermédiaire d'une tige rigide 14, elle-même reliée à deux vis respectivement supérieure 15 et inférieure 16, soumises, chacune, à l'action d'un ressort de compression 17, 18. Comme on le verra plus en détail par la suite, en regard de la figure 4, le clapet conique 12 permet d'augmenter ou de réduire la section de passage de l'orifice amont d'alimentation, ce qui a pour effet de modifier la pression aval P2.

En outre, le dispositif 1 comporte, dans la partie de chambre 6A, le clapet plan 19 (dénommé également ci-après, clapet à fond plat), en regard de l'orifice 11, qui est relié rigidement, par l'intermédiaire d'une tige de liaison 20 et de la tige 14, au clapet conique 12, l'ouverture de l'un entraînant la fermeture de l'autre, et inversement, comme on le verra également plus en détail par la suite.

A l'aide du conduit de dérivation 21 relié à la partie d'extrémité de raccord amont 2, la membrane 13 est soumise, sur sa face supérieure 13A, à la pression amont P1. La face inférieure 13B de la membrane 13, quant à elle, est soumise à la pression aval P2 régnant dans la partie de chambre 5A.

Le clapet conique 12, la tige 14 et la membrane 13 constituent un ensemble soumis, suivant les surfaces considérées et de façon explicitée ci-après, aux pressions P1 et P2, ainsi qu'aux efforts (R1 et R2) engendrés, respectivement, par les ressorts 17 et 18, efforts pouvant être réglés à l'aide des vis respectives 15 et 16.

Le dispositif selon l'invention comprend donc essentiellement un clapet conique 12 permettant de réduire ou d'agrandir une section de passage de fluide, ce qui entraîne une modification plus ou moins importante de la pression en aval du dispositif. Ce clapet 12 est relié à une membrane 13, sur laquelle agissent de part et d'autre, respectivement, les pressions amont P1 et aval P2.

A la position d'équilibre (membrane horizontale), correspond un différentiel ou différence de pressions amont-aval $\Delta P = P1-P2$ réglable (ressorts précontraints 17, 18), et la position (réglable également) du clapet 12 par rapport à son siège 10A est alors telle que la section de passage résultante, associée au $\Delta P$, conditionne le débit maximal.

Toute baisse de pression aval P2 (qui traduit une augmentation du débit demandée par le moteur) entraîne une rupture de l'équilibre et l'ouverture du clapet 12 pour augmenter la section de passage et, ainsi, rétablir la pression P2. L'ouverture du clapet 12 entraîne la fermeture du clapet 19, ce qui a pour conséquence de limiter le débit pendant cette phase de retour à l'équilibre.

De façon semblable, toute augmentation de pression aval P2 entraîne le phénomène inverse.

Le dispositif fonctionne quel que soit le niveau de pression amont P1 (sous réserve d'un bon dimensionnement mécanique) et n'est pas affecté par la diminution ou l'augmentation (éventuelle) de cette pression en cours de fonctionnement.

Seule la différence de pressions amont-aval $\Delta P = P1 - P2$ doit être prise en compte.

On notera de plus que le dispositif selon l'invention, utilisable que le fluide soit un gaz ou un liquide, est un dispositif limiteur de débit, monté directement sur une canalisation véhiculant un fluide et fonctionnant de façon totalement autonome, sans aucun apport d'énergie extérieur.

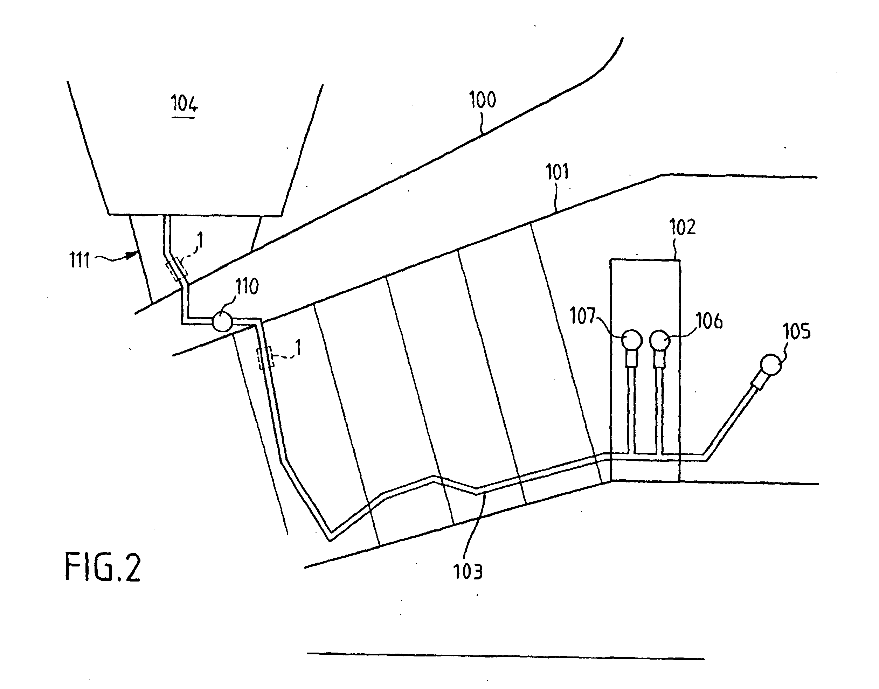

La figure 2 illustre schématiquement, en vue de dessus, une partie du circuit de carburant d'un aéronef, au niveau d'une aile 100 de ce dernier, laquelle présente un réservoir de carburant 101, comportant une cellule collectrice 102, et une canalisation 103 montrée menant à un moteur 104.

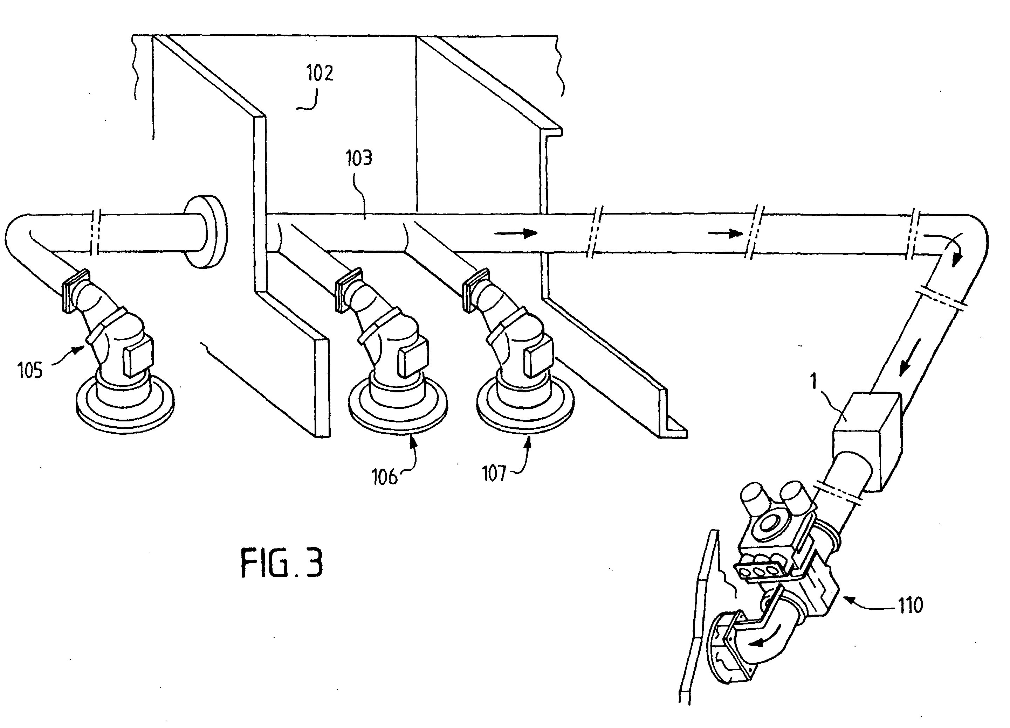

Des pompes de gavage ou de suralimentation 105, 106, 107 alimentent la canalisation 103 en carburant, cette dernière présentant également, comme on le voit mieux sur la figure 3, une vanne d'isolation basse pression 110. Comme montré sur les figures 2 et 3, le dispositif 1 selon l'invention, dans cette application particulière à l'alimentation en carburant d'un moteur d'aéronef, peut être monté en amont de la vanne d'isolation 110, relativement au sens d'écoulement du carburant indiqué par les flèches sur la figure 3 vers le moteur 104, ou au niveau du mât 111 du moteur 104 immédiatement en aval de la vanne d'isolation 110, ce qui peut être préféré pour des raisons de facilité de maintenance.

La bonne compréhension du fonctionnement du dispositif nécessite la mise en équilibre mécanique de l'ensemble : obturateur, tige et membrane, explicitée ci-après en regard des figures 4 et 5.

La projection des efforts sur l'axe Y-Y fournit la relation :

$$P1.S1 + R1 + P2.S3 + P1.S4.\cos(45) + P1.S6 = P2.S2 + P1.S5 + P1.S7 + R2$$

soit

$$P1.(S1 + S4.\cos(45) + S6 - S5 - S7) - P2.(S2 - S3) = R2 - R1$$

S1-S7 désignant les surfaces correspondantes, indiquées sur la figure 4.

En posant :

$$K1 = S1 + S4.\cos(45) + S6 - S5 - S7$$

$$K2 = S2 - S3,$$

K1 et K2 étant des constantes,
on obtient :

$$K1.P1 - K2.P2 = R2 - R1.$$

Par construction, et dans le cas de dimensionnement donné ici à titre d'exemple,

$$K1 = K2 = K$$

soit $K(P1 - P2) = R2 - R1$

En réglant, avec les vis 15, 16, les efforts R1 et R2 engendrés par les ressorts 17 et 18, on peut donc imposer un différentiel de pression $\Delta P = P1 - P2$.

L'obturateur 12 est en équilibre lorsque ce différentiel de pression est exactement respecté.

La position de l'obturateur 12 par rapport à son siège 10A (cote H) est réglée (système vis-écrou) de façon que la section de passage soit telle que, avec le différentiel de pression considéré (P1-P2), le débit ne puisse pas dépasser une valeur donnée.

De même, le clapet à fond plat 19 est positionné (cote H1, système vis-écrou également) pour que la section de passage soit identique à celle indiquée ci-dessus. Dans le fonctionnement "à l'équilibre", cette surface ne participe pas à la limitation du débit.

A la position d'équilibre, le débit atteint la valeur maximale souhaitée, le différentiel de pression étant imposé.

Si la pression aval P2 diminue, suite à une augmentation de la demande de carburant par le moteur (due par exemple à un phénomène d'embarquement), le débit instantané tend à augmenter puisque le différentiel de pression augmente. Cependant, la pression aval diminuant, l'équilibre est rompu, la membrane 13 fléchit vers le bas, ouvrant le clapet conique 12 et fermant le clapet à fond plat 19, ce qui permet simultanément la remontée de la pression sous la membrane 13 et la limitation du débit durant la phase de retour à l'équilibre.

Si, en revanche, la pression aval P2 augmente, le débit instantané tend à diminuer puisque le différentiel de pression diminue. De façon similaire au cas précédent, l'équilibre est rompu, la membrane 13 fléchit vers le haut fermant le clapet conique 12 et ouvrant le clapet à fond plat 19, ce qui permet la diminution de la pression sous la membrane 13 (par diminution de l'alimentation) et le retour à l'équilibre. On notera que, dans ce cas, il n'existe pas de limitation de débit, le débit demandé étant inférieur au débit maximal imposé.

En fait, le fonctionnement nominal du système est une fluctuation permanente entre les deux états décrits ci-dessus, sauf pour le cas où le débit demandé par le moteur est identique au débit maximal. On notera que le déplacement de l'obturateur est très faible et que le phénomène est continu.

L'exemple numérique suivant fournit un exemple de calcul concret pour un modèle d'aéronef choisi qui semble plus spécialement exposé à un phénomène de "sur-poussée", tel que précédemment défini.

La limite de qualité de vol, c'est-à-dire de contrôlabilité de l'aéronef (au niveau de la mer), en terme de débit de carburant correspondant à la poussée maximale admissible est, pour cet exemple, de 4,065 kg/s.

Le débit demandé pour la poussée de décollage et majoré de 15% (vieillissement) (au niveau de la mer) est de 3,6 kg/s.

Pour cet exemple, on choisit de limiter le débit à Qmax = 3,7 kg/s, tandis que la différence de pression est choisie à $\Delta P$ = P1-P2 = 0,3 bar (cela est un choix arbitraire, il peut très bien être plus important ou plus faible).

Le débit à travers le système s'exprime comme suit :

$$Q = b.S.\sqrt{2.\rho.\Delta P}$$

où b est un coefficient qui caractérise la géométrie du système, déterminé expérimentalement et estimé ici égal à 0,8, $\rho$ = 800 kg/m$^3$ et $\Delta P$ = 0,3 bar.

La section de passage S doit être :

$$S = Q/(b.\sqrt{2.\rho.\Delta P})$$

soit, avec les valeurs ci-dessus, S = 6,68.10$^{-4}$ m$^2$.

La section de passage au niveau du clapet conique 12 se calcule comme suit :

$$e = H.\sin(45)$$

ds = 2.$\pi$.r.e, ds étant l'élément de surface (surface d'un petit tronc de cône), r= D/2 et e représentant l'écartement surface tronconique 12A du clapet-siège 10A,
or, e = H.sin(45) et dr =e.cos(45) = H.sin(45).cos(45)
d'où ds = 2.$\pi$.r.dr/(cos(45))
soit

$$S = (2.\pi/(\cos(45))). \int_{r1}^{r2} r.dr$$

avec r1 = D/2 (D étant le diamètre de l'orifice 10) et r2 = D/2 + H.sin(45).cos(45), d'où S =$\pi$.(D.H.sin(45) + H$^2$.sin(45)$^2$. cos(45))

Si, par exemple, D=53 mm et si une section de passage S=6,68.10$^{-4}$ m$^2$ est souhaitée, cela correspond à une "levée" de l'obturateur H=5,4 mm.

Concernant la section de passage du clapet à fond plat 19, Si = $\pi$.D1.H1, où D1 = D = 53 mm, et S1 = S = 6,68.10$^{-4}$ m$^2$, correspondant à une levée de l'obturateur H1 = 4 mm.

Le réglage du système peut se faire comme suit.

On impose, par exemple, $\Delta$P=P1-P2=3.10$^4$Pa.

De plus, le fonctionnement du dispositif est tel que : K.(P1-P2) = R2-R1 avec par construction, par exemple, K = 4,26.10$^{-3}$ m$^2$, d'où, dans ce cas, R2-R1 = 12,8 daN.

En définitive, le réglage du système se limite aux trois opérations suivantes :

a) on positionne le clapet conique 12 de façon que, à la position d'équilibre (membrane 13 plane), corresponde une levée H = 5,4 mm (réglage par système vis-écrou),

b) on positionne le clapet à fond plat 19 de façon que, à la position d'équilibre (membrane 13 plane), corresponde une levée H1 = 4 mm (réglage par système vis-écrou),

c) à l'aide des vis 15, 16, on contraint les ressorts 17, 18 de façon que les efforts engendrés soient tels que R2-R1 = 12,8 daN (les ressorts 17, 18 étant identiques, le réglage s'effectue uniquement sur les courses relatives).

L'effort exercé par un tel ressort est proportionnel à sa course :

$$R1 = Kr.X1$$

$$R2 = Kr.X2$$

$$R2-R1 = Kr.(X2-X1) = 12,8 \text{ daN.}$$

Pour la simplification de la démonstration, on prendra : Kr = 1,28 daN/mm, valeur raisonnable pour des ressorts de cette taille, soit pour cette valeur, (X2-X1) = 10 mm. Choisissant pour X1 la valeur arbitraire, X1 = 5 mm, cela fournit R1 = 6,4 daN et X2 = 15 mm, soit R2 = 19,2 daN.

Avec un tel réglage, l'obturateur est en équilibre lorsque $\Delta$P = 3.10$^4$ Pa et le débit est limité à 3,7 kg/s.

En supposant que, pour une raison quelconque, la pression aval P2 augmente, par exemple, de 10$^4$ Pa, $\Delta$P diminue alors à 2.10$^4$ Pa.

On a toujours K($\Delta$P)=R2-R1. soit R2-R1 = 8,5 daN, soit 4,3 daN en moins par rapport à la position d'équilibre.

Les ressorts R1 et R2 étant identiques, les déplacements correspondant à 4,3 daN se répartiront de manière égale.

Pour 4,3 daN, avec Kr = 1,28 daN/mm, on a X2-X1 = 3,3 mm, soit 1,65 mm de plus en compression (par rapport à la position d'équilibre) pour le ressort R1

X1 = 6,65 mm R1 = 8,51 daN

et 1,65 mm de moins en compression (par rapport à la position d'équilibre) pour le ressort R2

X2 = 13,35 mm R2 = 17,09 daN.

La membrane 13 remonte de 1,65 mm, le clapet conique 12 se ferme, le clapet à fond plat 19 s'ouvre, ce qui a pour conséquence de diminuer le débit entrant dans le dispositif, le débit sortant étant constant (demande du moteur). La pression P2 sous la membrane 13 diminue et il y a retour à l'équilibre.

De façon semblable, en supposant que la pression aval P2 diminue (demande excessive du moteur) de 10$^4$ Pa, $\Delta$P augmente alors à 4.10$^4$ Pa.

On a toujours K($\Delta$P)=R2-R1, soit R2-R1 = 17 daN, soit 4,3 daN en plus par rapport à la position d'équilibre.

Les ressorts R1 et R2 étant identiques, les déplacements correspondant à 4,3 daN se répartissent de manière égale.

Pour 4,3 daN, avec Kr = 1,28 daN/mm, on a X2-X1 = 3,3 mm, soit 1,65 mm de moins en compression (par rapport à la position d'équilibre) pour le ressort R1

X1 = 3,35 mm R1 = 4,3 daN

et 1,65 mm de plus en compression (par rapport à la position d'équilibre) pour le ressort R2

X2 = 16,65 mm R2 = 21,3 daN.

La membrane 13 descend de 1,65 mm, le clapet conique 12 s'ouvre, le clapet à fond plat 19 se ferme, ce qui a pour conséquence d'augmenter le débit entrant dans le dispositif et donc d'augmenter la pression sous la membrane 13 jusqu'au retour de la position d'équilibre. Pendant cette phase, la fermeture du clapet à fond plat 19 assure la limitation du débit sortant du dispositif.

On notera que, pour la simplicité de la démonstration, on a considéré des variations de $10^4$ Pa (soit environ 0,1 bar), mais, en fait, le déplacement de l'obturateur se fait de façon continue, dès que l'on s'éloigne de la position d'équilibre, ce qui lui confère sa précision.

Il est à noter de plus que le dispositif décrit ci-dessus ne constitue pas un régulateur de débit proprement dit, mais simplement un limiteur de débit. En toute logique, son fonctionnement est "transparent" tant que le débit demandé par le moteur reste inférieur au débit maximal prédéfini, ce qui représente le cas nominal.

Par ailleurs, le dispositif se compose d'un nombre restreint de pièces, qui ne sont que faiblement sollicitées, et les problèmes d'étanchéité sont limités (en pratique, uniquement liés à la membrane).

En ce qui concerne l'alimentation par gravité (pompe de suralimentation coupée), le système devra être "contourné" du fait de la perte de charge engendrée par le dispositif et de la faible marge (en pression) disponible. Dans ce cas, un embarquement (ou sur-poussée) ne peut survenir que si l'on est en présence d'une double panne (perte de la pompe de suralimentation et défaillance du système de régulation du débit de carburant du moteur).

En outre, le dispositif limiteur de débit selon l'invention est autonettoyant. Si, pour une raison quelconque, la section de passage au niveau du clapet conique se bouche, la pression sous la membrane diminue, ce qui entraîne une ouverture plus importante dudit clapet. De façon semblable, si le clapet à fond plat se bouche, la pression sous la membrane augmente, ce qui entraîne la fermeture du clapet conique et une ouverture plus importante du clapet à fond plat.

En résumé, le dispositif selon l'invention présente les caractéristiques et avantages suivants.

C'est un dispositif limiteur de débit utilisable pour des fluides à l'état gazeux ou liquide. Ce dispositif fonctionne de manière autonome sans aucune source d'énergie extérieure, indépendamment du niveau de pression amont, en fonctionnant par différence (imposée) de pressions amont-aval. Par ailleurs, il est facilement réglable et, puisqu'il ne comporte que peu de pièces, sa fiabilité de fonctionnement est élevée, tout en ayant une masse et un encombrement limités.

En tout état de cause, le dispositif selon l'invention, dans l'application aéronautique, limite le débit de carburant à un niveau tel que la poussée maximale résultante en cas d'embarquement ne dépasse pas une valeur limite acceptable.

Le dispositif selon l'invention permet donc :

- de fonctionner de manière autonome sans aucun apport d'énergie extérieur (système mécanique),
- de limiter le débit de carburant (dans le cas de l'application aéronautique) au plus au niveau du débit correspondant à la poussée maximale admissible,
- de fournir le débit demandé pour la poussée de décollage et majoré de 15% (vieillissement) "au niveau de la mer", et cela avec les pompes de gavage en fonctionnement,
- de ne pas être un point privilégié d'accumulation de débris,
- d'être testé périodiquement et facilement.

## Revendications

1. Dispositif autonome de limitation du débit d'un fluide dans une canalisation, le débit dudit fluide dépendant de la section de passage dudit fluide dans ladite canalisation et de la différence des pressions amont et aval, relativement à ladite section de passage, dans le sens d'écoulement dudit fluide, ledit dispositif comportant :

   - un boîtier (4) délimitant une première chambre (5) subdivisée en deux parties de chambre (5A,5B) reliées entre elles par un premier orifice (10) formant ladite section de passage (S) ;
   - un premier clapet (12) pour régler ladite section de passage (S) ;
   - des moyens déformables (13), reliés rigidement audit premier clapet (12) et soumis, d'un côté, à ladite pression amont (P1) et, de l'autre côté, à ladite pression aval (P2), et
   - des moyens (15, 16 ; 17, 18) aptes à définir, pour une différence prédéterminée desdites pressions amont et aval, une position d'équilibre pour ledit premier clapet (12) et lesdits moyens déformables (13),

   une variation de la différence desdites pressions amont et aval entraînant une déformation desdits moyens déformables (13) et un déplacement concomitant dudit premier clapet (12) pour ramener la différence desdites pressions amont et aval à celle correspondant à ladite position d'équilibre, **caractérisé en ce qu'**il comporte, dans une seconde chambre (6) dudit boîtier (4) reliée à ladite première chambre (5) et subdivisée en deux parties de chambre (6A, 6B) reliées entre elles par un second orifice (11), un second clapet (19) disposé en regard dudit second orifice (11) et relié rigidement audit premier clapet (12), de façon que l'un desdits premier et second clapets s'ouvre quand l'autre se ferme et vice-versa.

**2.** Dispositif selon la revendication 1,
**caractérisé en ce que** lesdits moyens déformables sont constitués par une membrane souple (13), ancrée à la surface interne dudit boîtier (4) et reliée audit premier clapet (12) par une tige rigide (14) et **en ce que** ledit second clapet (19) est relié rigidement audit premier clapet (12) par l'intermédiaire d'une tige de liaison (20) et de ladite tige rigide (14).

**3.** Dispositif selon la revendication 2,
**caractérisé en ce qu'**un conduit de dérivation (21), relié à une partie d'extrémité de raccord amont (2) dudit boîtier (4), permet de soumettre une première face (13A) de ladite membrane (13) à ladite pression amont (P1), la seconde face (13B) de ladite membrane (13) étant soumise à ladite pression aval (P2) régnant dans ladite partie de chambre (5A) comprise entre ledit premier clapet (12) et ladite membrane (13).

**4.** Dispositif selon l'une des revendications 1 à 3,
**caractérisé en ce que** lesdits moyens aptes à définir ladite position d'équilibre comprennent au moins un ensemble vis-ressort précontraint (15, 16 ; 17, 18) destiné à agir sur ledit ensemble membrane (13) -premier clapet (12) - tige rigide (14).

**5.** Circuit de carburant pour aéronef, présentant, au niveau d'une aile de ce dernier, un réservoir de carburant et une canalisation menant à un moteur,
**caractérisé en ce qu'**il comporte un dispositif (1) selon l'une quelconque des revendications 1 à 4, monté sur ladite canalisation (103).

**6.** Circuit de carburant pour aéronef selon la revendication 5, dans lequel des pompes de gavage ou de suralimentation alimentent ladite canalisation en carburant, cette dernière présentant une vanne d'isolation basse pression,
**caractérisé en ce que** ledit dispositif (1) est monté en amont de ladite vanne d'isolation (110), relativement au sens d'écoulement du carburant vers le moteur (104).

**7.** Circuit de carburant pour aéronef selon la revendication 5, dans lequel des pompes de gavage ou de suralimentation alimentent ladite canalisation en carburant, cette dernière présentant une vanne d'isolation basse pression,
**caractérisé en ce que** ledit dispositif (1) est monté au niveau du mât (111) dudit moteur (104) et, donc, immédiatement en aval de ladite vanne d'isolation (110).

**Patentansprüche**

**1.** Eigenständige Vorrichtung zur Durchflussbegrenzung eines Mediums in einer Leitung, wobei die Durchflussmenge des genannten Mediums vom Durchgangsquerschnitt des genannten Mediums und vom Unterschied der Drücke stromauf- und stromabwärts in Bezug auf den genannten Durchgangsquerschnitt in Fließrichtung des genannten Mediums abhängt und die genannte Vorrichtung folgendes umfasst:

- ein Gehäuse (4), das eine erste Kammer (5) begrenzt, die in zwei Kammerteile (5A, 5B) unterteilt ist, die miteinander durch eine erste Öffnung (10) verbunden sind, die den genannten Durchflussquerschnitt (S) bilden;
- eine erste Klappe (12) zur Regelung des genannten Durchgangsquerschnitts (S);
- verformbare Mittel (13), die starr mit der genannten ersten Klappe (12) verbunden und von einer Seite dem genannten Druck stromaufwärts (P1) und von der anderen Seite dem genannten Druck stromabwärts (P2) unterliegen, und
- Mittel (15, 16; 17, 18), die für eine vorher ermittelte Differenz der genannten Drücke stromauf- und stromabwärts eine Gleichgewichtsstellung für die genannte erste Klappe (12) und die genannten verformbaren Mittel (13) definieren können,

wobei eine Veränderung der Differenz der genannten Drücke stromauf- und stromabwärts eine Verformung der genannten verformbaren Mittel (13) und eine gleichzeitige Verschiebung der genannten ersten Klappe (12) nach sich zieht, um die Differenz der genannten Drücke stromauf- und stromabwärts zu dem Druckwert zurückzubringen, der der genannten Gleichgewichtsstellung entspricht, **dadurch gekennzeichnet, dass** sie in einer zweiten Kammer (6) des genannten Gehäuses (4), die mit der ersten Kammer (5) verbunden und in zwei Kammerteile (6A, 6B) unterteilt ist, die durch eine zweite Öffnung (11) miteinander verbunden sind, eine zweite Klappe (19) umfasst, die so gegenüber der genannten zweiten Öffnung (11) angeordnet und starr mit der genannten ersten Klappe (12) verbunden ist, dass eine der genannten ersten und zweiten Klappen sich öffnet, wenn sich die andere schließt und umgekehrt.

2. Vorrichtung gemäß Anspruch 1,
   **dadurch gekennzeichnet, dass** die genannten verformbaren Mittel aus einer flexiblen Membran (13), die an der Innenfläche des genannten Gehäuses (4) verankert und über eine starre Stange (14) mit der genannten ersten Klappe (12) verbunden ist, bestehen sowie dadurch, dass die genannte zweite Klappe (19) über eine Verbindungsstange (20) und die genannte starre Stange (14) starr mit der genannten ersten Klappe (12) verbunden ist.

3. Vorrichtung gemäss Anspruch 2,
   **dadurch gekennzeichnet, dass** eine Abzweigleitung (21), die mit einem stromaufwärts liegenden Anschlussstutzenendteil (2) verbunden ist, die es gestattet, dass eine erste Fläche (13A) der genannten Membran (13) dem genannten Druck stromaufwärts (P1) ausgesetzt wird, wobei die zweite Fläche (13B) der genannten Membran (13) dem genannten Druck stromabwärts (P2), der im genannten, zwischen der genannten ersten Klappe (12) und der genannten Membran (13) liegenden Kammerteil (5A) herrscht, ausgesetzt ist.

4. Vorrichtung gemäss einem der Ansprüche 1 bis 3,
   **dadurch gekennzeichnet, dass** die genannten Mittel, die in der Lage sind, die genannte Gleichgewichtsstellung zu definieren, mindestens eine Einheit Schraube - vorgespannte Feder (15, 16; 17, 18) umfassen, die auf die genannte Einheit Membran (13) - erste Klappe (12) - starre Stange (14) wirken soll.

5. Treibstoffkreis eines Flugzeugs, der an einem Flügel des Flugzeugs einen Treibstoffbehälter und eine zu einem Motor führende Leitung aufweist,
   **dadurch gekennzeichnet, dass** es eine Vorrichtung (1) gemäß einem beliebigen der Ansprüche 1 bis 4 umfasst, die an die genannte Leitung (103) montiert ist.

6. Treibstoffkreis eines Flugzeugs gemäß Anspruch 5,

   in dem Treibstoffzusatz- oder Aufladungspumpen der genannten Leitung Treibstoff zuführen, wobei letztere einen Niederdruck-Trennschieber umfasst,

   **dadurch gekennzeichnet, dass** die genannte Vorrichtung (1) stromaufwärts des genannten Trennschiebers (110) in Bezug auf die Strömungsrichtung des Treibstoffs zum Motor (104) angeordnet ist.

7. Treibstoffkreis eines Flugzeugs gemäß Anspruch 5,

   in dem Treibstoffzusatz- oder Aufladungspumpen der genannten Leitung Treibstoff zuführen, wobei letztere einen Niederdruck-Trennschieber umfasst,

   **dadurch gekennzeichnet, dass** die genannte Vorrichtung (1) in Höhe der Strebe (111) des genannten Motors (104) und somit direkt stromabwärts des genannten Trennschiebers montiert ist.

**Claims**

1. Autonomous device for limiting the rate of flow of a fluid through a pipe, the flow rate of the said fluid depending on the passage cross section of the said fluid in the said pipe and on the difference between the upstream and downstream pressures, relative to the said passage cross section, in the direction in which the said fluid flows, the said device comprising:

   - a housing (4) delimiting a first chamber (5) subdivided into two chamber parts (5A, 5B) connected by a first orifice (10) forming the said passage cross section (S);
   - a first shutter (12) for regulating the said passage cross section (S);
   - deformable means (13), rigidly connected to the said first shutter (12) and subjected, on the one side, to the said upstream pressure (P1) and, on the other side, to the said downstream pressure (P2), and
- means (15, 16; 17, 18) capable of defining, for a predetermined difference between the said upstream and downstream pressures, a position of equilibrium for the said first shutter (12) and the said deformable means (13),

a variation in the difference between the said upstream and downstream pressures leading to a deformation of the said deformable means (13) and to an accompanying movement of the said first shutter (12) to return the difference between the said upstream and downstream pressures to the difference that corresponds to the said position of equilibrium, **characterized in that** it comprises, in a second chamber (6) of the said housing (4), connected to the said first chamber (5) and subdivided into two chamber parts (6A, 6B) connected by a second orifice (11), a second shutter (19) arranged facing the said second orifice (11) and rigidly connected to the said first shutter (12) so that one of the said first and second shutters opens when the other closes, and vice versa.

2. Device according to Claim 1,
   **characterized in that** the said deformable means consist of a flexible diaphragm (13) anchored to the internal surface of the said housing (4) and connected to the said first shutter (12) by a rigid stem (14) and **in that** the said second shutter (19) is rigidly connected to the said first shutter (12) by a connecting stem (20) and by the said rigid stem (14).

3. Device according to Claim 2,
   **characterized in that** a bypass pipe (21), connected to an upstream connector end part (2) of the said housing (4), allows a first face (13A) of the said diaphragm (13) to be subjected to the said upstream pressure (P1), the second face (13B) of the said diaphragm (13) being subjected to the said downstream pressure (P2) prevailing in the said chamber part (5A) that lies between the said first shutter (12) and the said diaphragm (13).

4. Device according to one of Claims 1 to 3,
   **characterized in that** the said means capable of defining the said position of equilibrium comprise at least one screw/preloaded-spring assembly (15, 16; 17, 18) intended to act on the said diaphragm-(13)/first shutter-(12)/rigid stem-(14) assembly.

5. Fuel circuit for an aircraft which, in a wing of this aircraft, has a fuel tank and a pipe leading to an engine,
   **characterized in that** it comprises a device (1) according to any one of Claims 1 to 4, mounted on the said pipe (103).

6. Fuel circuit for an aircraft according to Claim 5, in which booster or backing pumps supply the said pipe with fuel, this pipe having a low-pressure isolating valve,
   **characterized in that** the said device (1) is mounted upstream of the said isolating valve (110) relative to the direction of flow of the fuel towards the engine (104).

7. Fuel circuit for an aircraft according to Claim 5, in which booster or backing pumps supply the said pipe with fuel, this pipe having a low-pressure isolating valve,
   **characterized in that** the said device (1) is mounted at the stub (111) of the said engine (104) and therefore immediately downstream of the said isolating valve (110).

FIG.1

EP 0 965 898 B1

FIG.2

EP 0 965 898 B1

FIG. 3

FIG.4

FIG.5